(19) **Europäisches Patentamt**

**European Patent Office**

**Office européen des brevets**

(11) **EP 1 021 666 B1**

(12) **EUROPÄISCHE PATENTSCHRIFT**

(45) Veröffentlichungstag und Bekanntmachung des Hinweises auf die Patenterteilung:
**09.01.2002 Patentblatt 2002/02**

(21) Anmeldenummer: **98954336.8**

(22) Anmeldetag: **05.10.1998**

(51) Int Cl.$^7$: **F16H 61/06**

(86) Internationale Anmeldenummer:
**PCT/EP98/06314**

(87) Internationale Veröffentlichungsnummer:
**WO 99/18372 (15.04.1999 Gazette 1999/15)**

(54) **VERFAHREN ZUR DRUCKADAPTION EINER ÜBERSCHNEIDUNGS-HOCHSCHALTUNG**

METHOD FOR ADAPTATION OF PRESSURE OF AN OVERLAPPING UPSHIFTING

PROCEDE D'ADAPTATION DE LA PRESSION D'UN PASSAGE DE VITESSES MONTANT PAR CHEVAUCHEMENT

(84) Benannte Vertragsstaaten:
**DE FR GB SE**

(30) Priorität: **06.10.1997 DE 19744100**

(43) Veröffentlichungstag der Anmeldung:
**26.07.2000 Patentblatt 2000/30**

(73) Patentinhaber: **ZF FRIEDRICHSHAFEN Aktiengesellschaft**
**88038 Friedrichshafen (DE)**

(72) Erfinder:
• **GIERER, Georg**
  **D-88079 Kressbronn (DE)**
• **POPP, Christian**
  **D-88079 Kressbronn (DE)**

(56) Entgegenhaltungen:
**EP-A1- 0 783 079      EP-A2- 0 750 139**
**WO-A1-96/01961       WO-A1-96/17189**
**DE-A1- 19 511 897     DE-A1- 19 531 675**
**DE-A1- 19 612 893**

**Beschreibung**

Die Erfindung betrifft ein Verfahren zur Druckadaption einer Überschneidungs-Hochschaltung in einem Automatgetriebe mit einer ersten öffnenden und einer zweiten schließenden Kupplung. Hierbei besteht die Überschneidungsschaltung aus zwei Phasen. Während der ersten Phase wird über die Regelung des Druckniveaus der ersten Kupplung eine Überhöhung der Getriebeeingangsdrehzahl eingestellt. Während der zweiten Phase übernimmt die zweite Kupplung von der ersten Kupplung die Last.

Bei elektrohydraulisch gesteuerten Automatgetrieben können die Schaltungen als Überschneidungsschaltungen ausgeführt sein. So schlägt die auf die Anmelderin zurückgehende Anmeldung DE-OS 42 40 621 ein Steuerungs- und Regelungsverfahren für eine Überschneidungsschaltung vor. Hierbei besteht die Überschneidungsschaltung aus einer ersten Phase, während der eine Drehzahlüberhöhung der Getriebeeingangsdrehzahl eingeregelt wird, und einer zweiten Phase, der eigentlichen Lastübernahme. Drehzahlüberhöhung bedeutet, daß über das Druckniveau der ersten Kupplung eine höhere Getriebeeingangsdrehzahl eingestellt wird als wie es sich aus dem Übersetzungsverhältnis zu Beginn der Hochschaltung ergeben würde. Die Lastübernahme, d. h. der Augenblick, in dem die zweite Kupplung beginnt, die Last von der ersten Kupplung zu übernehmen, wird daran erkannt, wenn die Drehzahlüberhöhung sich wieder verkleinert. Das zuvor beschriebene Verfahren hat sich in der Praxis bewährt. Dennoch wird von einigen Fahrern der Zeitraum der ersten Phase, also der Einregelung der Getriebeeingangsdrehzahl auf den Überhöhungswert, als zu lange empfunden.

Ausgehend vom zuvor beschriebenen Stand der Technik besteht die der Erfindung zugrunde liegende Aufgabe insofern darin, die Spontanität des Automatgetriebes zu erhöhen.

Eine erste Lösung der Aufgabe besteht darin, daß bei Ausgabe des Schaltbefehls der Zeitraum gemessen wird, bis die Getriebeeingangsdrehzahl die Drehzahlüberhöhung erreicht hat. Diese wird sodann mit einer vorgegebenen Zeit verglichen, indem ein Differenzwert berechnet und dieser Differenzwert in einem Summenspeicher vorzeichenbehaftet summiert wird. Überschreitet der Wert des Summenspeichers einen Grenzwert, so wird ein Adaptionswert in einem Korrekturspeicher abgelegt, so daß das Abschalt-Druckniveau der ersten Kupplung, also der abschaltenden, bei nachfolgenden Schaltungen adaptiert wird.

Eine zweite Lösung der Aufgabe besteht darin, daß bei Vorhandensein der in der ersten Lösung ausgeführten Adaptionskriterien der Abschaltzeitpunkt der ersten Kupplung, also der abschaltenden, bei nachfolgenden Schaltungen adaptiert wird.

In einer Ausgestaltung sowohl zur ersten als auch zweiten Lösung wird vorgeschlagen, daß sowohl der Summenspeicher als auch der Korrekturspeicher in Getriebeeingangsmoment, Temperatur- und Drehzahlklassen eingeteilt ist. Für die Drehzahlklassen kann sowohl die Getriebeeingangs- als auch die Getriebeausgangsdrehzahl verwendet werden. Die erfindungsgemäße Lösung und deren Ausgestaltung den. Die erfindungsgemäße Lösung und deren Ausgestaltung bietet den Vorteil, daß die Einregelung der Getriebeeingangsdrehzahl auf den Überhöhungswert rascher erfolgt, da hier als Führungsgröße des Regelkreises der adaptierte Wert verwendet wird. Hieraus resultiert eine kürzere Regelphase. Die Reaktion des Automatgetriebes ist somit enger an das Verhalten des Fahrers gekoppelt, es wirkt dadurch spontaner.

Weitere vorteilhafte Ausgestaltungen sind in den Unteransprüchen enthalten, wobei gemäß Anspruch 7 die Schaltung für die Adaption nicht bewertet wird, falls vor Beginn der zweiten Phase einer der folgenden Bedingungen erfüllt ist: Drosselklappenwert ist kleiner einem Grenzwert oder Gradient der Drosselklappe ist größer einem Grenzwert oder Schubbetrieb ist erkannt oder Schaltbefehl über Wählhebel ist erkannt oder die Temperatur des ATF (Automatic Transmission Fluid) ist kleiner einem Grenzwert.

In den Zeichnungen ist ein Ausführungsbeispiel dargestellt.
Es zeigen:

Fig. 1    ein System-Schaubild;
Fig. 2    eine Kupplungs-Logik-Tabelle;
Fig. 3    ein Zeit-Diagramm der ersten Lösung;
Fig. 4    ein Zeit-Diagramm der zweiten Lösung;
Fig. 5    einen Programm-Ablaufplan der ersten Lösung und
Fig. 6    einen Programm-Ablaufplan der zweiten Lösung.

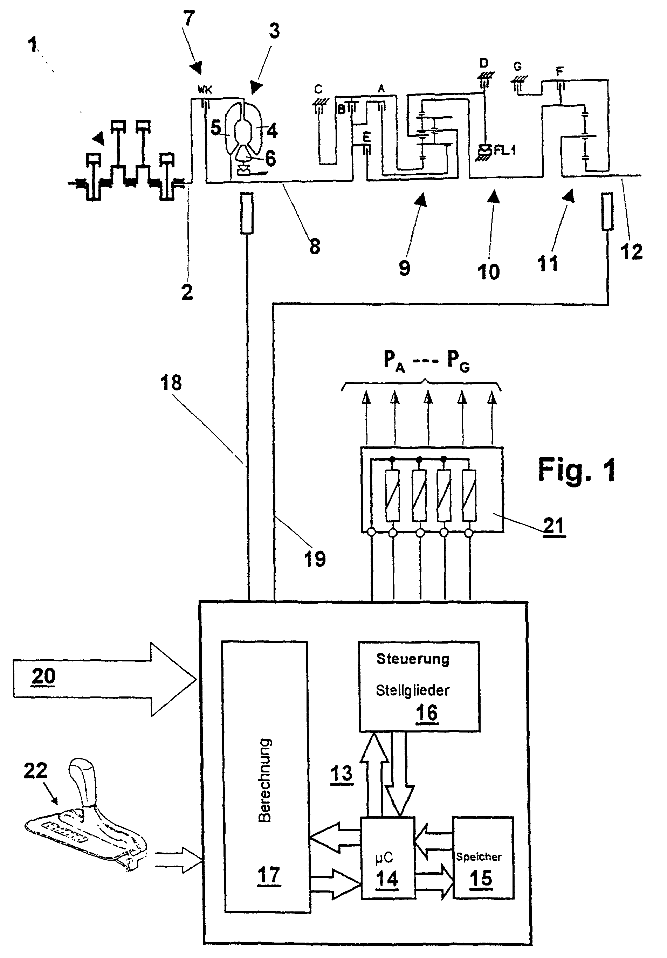

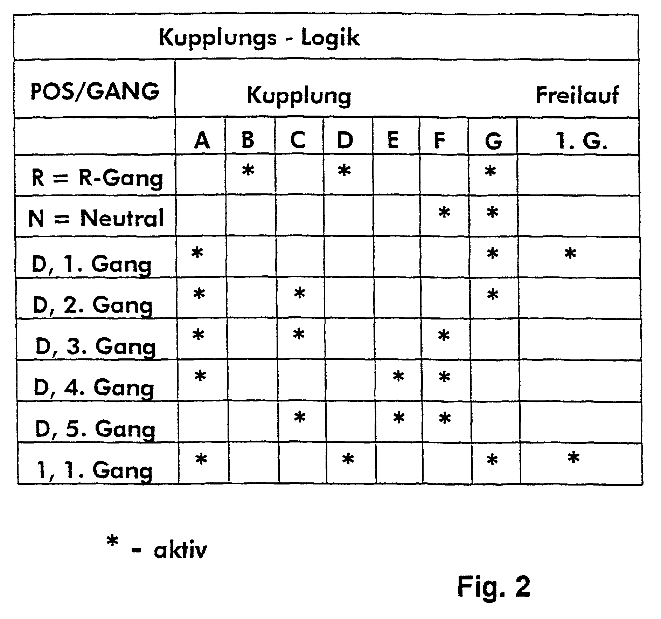

Fig. 1 zeigt ein System-Schaubild eines Automatgetriebes. Dieses besteht aus dem eigentlichen mechanischen Teil, einem hydrodynamischen Wandler 3, einem hydraulischen Steuergerät 21 und einer elektronischen Getriebesteuerung 13. Angetrieben wird das Automatgetriebe von einer Antriebseinheit 1, vorzugsweise Brennkraftmaschine, über eine Antriebswelle 2. Dieses ist mit dem Pumpenrad 4 des hydrodynamischen Wandlers 3 drehfest verbunden. Bekanntermaßen besteht der hydrodynamische Wandler 3 aus einem Pumpenrad 4, einem Turbinenrad 5 und einem Leitrad 6. Parallel zum hydrodynamischen Wandler 3 ist eine Wandlerkupplung 7 angeordnet. Die Wandlerkupplung 7 und das Turbinenrad 5 führen auf eine Turbinenwelle 8. Bei betätigter Wandlerkupplung 7 hat die Turbinenwelle 8 die gleiche Drehzahl wie die Antriebswelle 2. Der mechanische Teil des Automatgetriebes besteht aus Kupplungen und Bremsen A bis G, einem Freilauf 10 (FL1), einem Ravigneaux-Satz 9 und einem nachgeordneten Planetenradsatz 11. Der Abtrieb geschieht über eine Getriebeausgangswelle 12. Diese führt auf ein nicht dargestelltes Differential, welches über zwei Achshalbwellen die Antriebsräder eines nicht dargestellten Fahrzeuges antreiben. Über eine entsprechende Kupplungs-/Brems-Kombination wird eine Gangstufe festgelegt. Die Zuordnung der Kupplungslogik zur Gangstufe ist aus der Fig. 2 ersichtlich. So wird z. B. bei einer Rückschaltung aus dem vierten in den dritten Gang die Bremse C geschlossen und die Kupplung E deaktiviert. Wie weiter aus der Tabelle 2 ersichtlich ist, sind die Schaltungen von der zweiten bis zur fünften Übersetzungsstufe jeweils als Überschneidungsschaltungen ausgeführt. Da der mechanische Teil für das weitere Verständnis der Erfindung nicht relevant ist, wird auf eine detaillierte Beschreibung verzichtet.

Die elektronische Getriebesteuerung 13 wählt in Abhängigkeit von Eingangsgrößen 20 bzw. des Wählhebels 22 eine entsprechende Fahrstufe aus. Über das hydraulische Steuergerät 21, in dem sich elektromagnetische Stellglieder befinden, aktiviert sodann die elektronische Getriebesteuerung 13 eine entsprechende Kupplungs-/Brems-Kombination. Während der Schaltübergänge bestimmt die elektronische Getriebesteuerung 13 den Druckverlauf der an der Schaltung beteiligten Kupplungen/Bremsen, Von der elektronischen Getriebesteuerung 13 sind in stark vereinfachter Form als Blöcke dargestellt: Micro-Controller 14, Speicher 15, Funktionsblock Steuerung Stellglieder 16 und Funktionsblock Berechnung 17. Im Speicher 15 sind die getrieberelevanten Daten abgelegt. Getrieberelevante Daten sind z. B. Programme, fahrzeugspezifische Kennwerte als auch Diagnosedaten und Adaptionswerte. Üblicherweise ist der Speicher 15 als EPROM, EEPROM oder als gepufferter RAM ausgeführt. Im Funktionsblock Berechnung 17 werden die für einen Schaltungsverlauf relevanten Daten berechnet. Der Funktionsblock Steuerung Stellglieder 16 dient der Ansteuerung der sich im hydraulischen Steuergerät 21 befindenden Stellglieder.

Die der elektronischen Getriebesteuerung 13 zugeführten Eingangsgrößen 20 sind z. B. eine den Leistungswunsch des Fahrers repräsentierende Größe, wie etwa die Fahrpedal-/ Drosselklappenstellung oder manuelle Schaltungsanforderungen, das Signal des von der Brennkraftmaschine abgegebenen Moments, die Drehzahl bzw. Temperatur der Brennkraftmaschine usw. Üblicherweise werden die Brennkraftmaschinenspezifischen Daten von einem Motorsteuergerät bereitgestellt. Dieses ist in Fig. 1 nicht dargestellt. Als weitere Eingangsgrößen erhält die elektronische Getriebesteuerung 13 die Drehzahl der Turbinenwelle 18 (nT) und der Getriebeausgangswelle 19 (nAB).

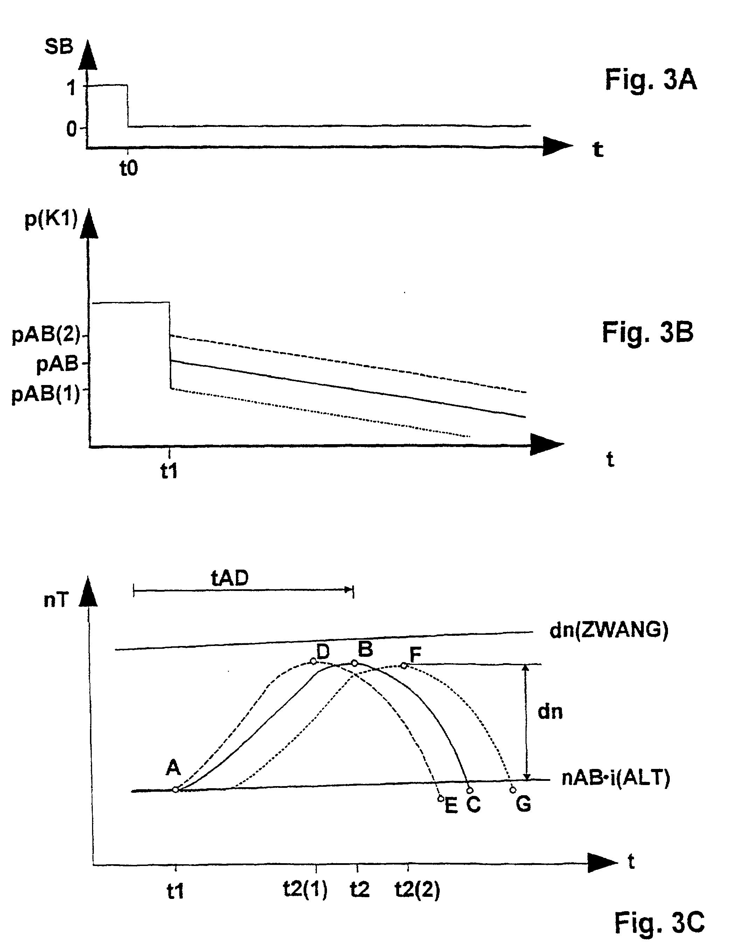

In Fig. 3 ist die erste erfindungsgemäße Lösung dargestellt, bestehend aus den Teil-Fig. 3A bis 3C. Hierbei zeigen jeweils über der Zeit Fig. 3A den Schaltbefehl, Fig. 3B den Druckverlauf der ersten, also der abschaltenden Kupplung K1 und Fig. 3C den Verlauf der Getriebeeingangsdrehzahl nT für drei Fallbeispiele während der ersten Phase der Überschneidungsschaltung. Der Kurvenzug mit den Punkten A, B und C entspricht dem idealen Verlauf. Der Kurvenzug mit den Punkten A, D und E entspricht einem Getriebeeingangsdrehzahlverlauf, der zeitlich zu rasch erfolgt. Der Kurvenzug mit den Punkten A, F und G entspricht einem Verlauf, der zeitlich zu spät erfolgt. Der Drehzahlwert der Punkte D, B und F ist um den Betrag dn erhöht gegenüber dem Drehzahlwert, der sich aus der Getriebeausgangsdrehzahl nAB und dem alten Übersetzungsverhältnis i(ALT) ergeben würde. Ein derartiges Verfahren, eine Drehzahlerhöhung während der Überschneidungsschaltung einzustellen, ist aus der DE-OS 42 40 621 bekannt, die mit zum Offenbarungsgehalt dieser Anmeldung gehört.

Zum Zeitpunkt t0 gibt die elektronische Getriebesteuerung 13 den Schaltbefehl aus. Nach Ablauf einer sich aus den Signallaufzeiten ergebenden Verzögerungszeit erfolgt zum Zeitpunkt t1 eine Verringerung des Druckniveaus der ersten Kupplung K1 auf das Abschalt-Druckniveau pAB. Danach erfolgt für die erste Kupplung K1 eine negative Druckrampe. Als Folge dieser negativen Druckrampe beginnt zum Zeitpunkt t1 sich die Getriebeeingangsdrehzahl nT zu überhöhen. Zum Zeitpunkt t2 hat diese ihren maximalen Wert erreicht bzw. wurde vom Regler daraufhin eingestellt. Der Maximalwert ergibt sich aus der Getriebeausgangsdrehzahl nAB mal dem ursprünglichen Übersetzungsverhältnis i(ALT) plus dem Überhöhungswert dn. Der Zeitpunkt t2, also im Punkt B, ist als das Ende der ersten Phase anzusehen. Danach folgt die zweite Phase, während der die zweite Kupplung die Last von der ersten Kupplung übernimmt, so daß die Drehzahlüberhöhung dn sich verringert und die Getriebeeingangsdrehzahl nT sich in Richtung des neuen Synchronpunktes verändert.

Liegt das Abschalt-Druckniveau der ersten Kupplung auf einem erhöhten Wert pAB(2), so braucht der Regler einen längeren Zeitraum, um die Drehzahlüberhöhung dn einzuregeln. Hieraus resultiert der Verlauf mit den Punkten A und F. Liegt das Abschalt-Druckniveau der ersten Kupplung auf einem zu geringen Druckniveau pAB(1), so beginnt als Reaktion hierauf, sich die Getriebeeingangsdrehzahl nT zu rasch zu erhöhen, dies entspricht in der Fig. 3C dem Kurvenzug mit den Punkten A und D.

Die erfindungsgemäße Lösung schlägt nun vor, daß zum Zeitpunkt t0, also mit dem Abschaltbefehl, eine Zeit zu laufen beginnt, deren Ende dadurch bestimmt ist, wenn die Getriebeeingangsdrehzahl nT den Überhöhungswert dn erreicht hat. Diese Zeit wird mit einer vorgegebenen Zeit tAD verglichen, indem eine Differenz gebildet wird, d. h. DIFF = tAD -t2. Die Zeit tAD entspricht hierbei dem Idealwert und endet im Punkt B, also zum Zeitpunkt t2. Diese Differenz wird in einem Summenspeicher SUM(DIFF) vorzeichenbehaftet summiert. Im Fall, daß die Getriebeeingangsdrehzahl nT im Punkt F, also zum Zeitpunkt t2(2), den Überhöhungswert dn erreicht, ergibt sich somit eine negative Differenz. Im anderen Fall, wenn die Getriebeeingangsdrehzahl nT den Überhöhungswert dn zu früh erreicht, also zum Zeitpunkt t2(1), ergibt sich eine positive Differenz. Überschreitet der Inhalt des Summenspeichers SUM (DIFF) einen Grenzwert ±GW, so wird in einem Korrekturwertspeicher KORR ein Adaptionswert dp abgelegt. Der Summen- SUM(DIFF) als auch der Korrekturspeicher KORR ist in Getriebeeingangsmoment Mt, Temperatur- C(ATF) und Drehzahlklassen nT eingeteilt. Es gilt somit:

$$SUM(DIFF) = f(Mt, C(ATF), nT) \text{ bzw.}$$

$$KORR = f(Mt, C(ATF), nT).$$

Der Adaptionswert dp bewirkt, daß das Abschalt-Druckniveau pAB der ersten Kupplung bei den nachfolgenden Schaltungen adaptiert wird, es gilt somit: pAB = pAB ±dp.

In Fig. 3C ist zusätzlich eine Linie dn(ZWANG) eingezeichnet. Überschreitet die Getriebeeingangsdrehzahl nT diesen Drehzahlwert dn(ZWANG), so wird der Korrekturwertspeicher KORR insgesamt mit einem Festwert dp2 belegt.

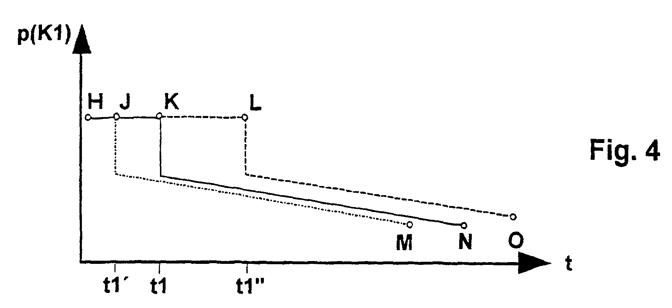

In Fig. 4 ist die zweite Lösung der Aufgabe dargestellt. Ausgehend von den in Fig. 3C dargestellten Getriebeeingangsdrehzahl-Verläufen wird als Folgereaktion bei Erfülltsein der Adaptionskriterien der Abschaltzeitpunkt der ersten Kupplung K1 verändert. Hierbei entspricht der Zeitpunkt t1 dem idealen Verhalten, Kurvenzug H, K und N, entsprechend dem Getriebeeingangsdrehzahlverlauf mit den Punkten A, B und C. Der Abschaltzeitpunkt t1' mit dem Kurvenzug H, J und M gilt als Folgereaktion für einen Getriebeeingangsdrehzahl-Verlauf, der zeitlich zu spät erfolgt. Dies entspricht in Fig. 3C dem Verlauf mit den Punkten A, F und G. Der Zeitpunkt t1" mit dem Kurvenzug H, L und O ergibt sich als Folgereaktion für einen Getriebeeingangsdrehzahl-Verlauf, der zeitlich zu früh erfolgt. Dies entspricht in Fig. 3C dem Kurvenzug mit den Punkten A, D und E.

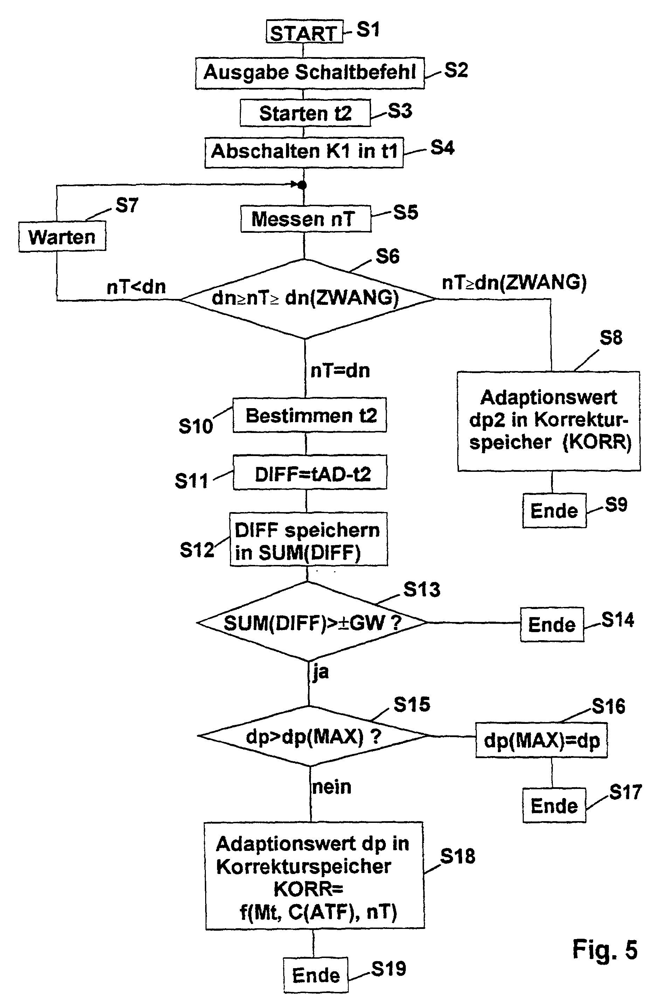

In Fig. 5 ist ein Programm-Ablaufplan der ersten Lösung dargestellt. Dieses beginnt in Schritt S1 mit dem Start, also z. B. dem Feststellen, daß eine Hochschaltung erforderlich ist. Im Schritt S2 gibt die elektronische Getriebesteuerung 13 den Schaltbefehl aus. Zeitgleich wird die Zeitstufe t2 im Schritt S3 gestartet. Im Schritt S4 wird die Kupplung K1 in t1 abgeschaltet. Im Schritt S5 wird der aktuelle Getriebeeingangsdrehzahlwert nT gemessen. Im Schritt S6 wird geprüft, ob die Getriebeeingangsdrehzahl nT kleiner oder gleich dem Überhöhungswert dn bzw. größer oder gleich der Zwangsadaptionsüberhöhungs-Drehzahl dn(ZWANG) ist. Für den Fall, daß die Getriebeeingangsdrehzahl kleiner als der Überhöhungswert dn ist, wird mit Schritt S7 eine Warteschleife durchlaufen. Für den Fall, daß die Getriebeeingangsdrehzahl größer oder gleich der Zwangsadaptionsüberhöhungs-Drehzahl dn(ZWANG) ist, wird mit Schritt S8 ein Adaptionswert dp2 im Korrekturspeicher KORR abgelegt und mit Schritt S9 ist das Adaptionsprogramm beendet. Ergibt die Prüfung bei Schritt S6, daß die Getriebeeingangsdrehzahl nT gleich dem Überhöhungswert dn ist, wird der hierfür seit dem Zeitpunkt t0 vergangene Zeitraum t2 im Schritt S10 bestimmt. Bei Schritt S11 wird sodann die Differenz aus zwei Zeitwerten tAD -t2 gewonnen, wobei tAD einer vorgegebenen Zeit (Sollwert) entspricht. Diese Differenz wird im Summenspeicher SUM(DIFF) bei Schritt S12 vorzeichenbehaftet abgelegt. Danach folgt bei Schritt S13 die Abfrage, ob der Inhalt des Summenspeichers SUM(DIFF) größer einem Grenzwert ± GW ist. Ist dies nicht der Fall, wird bei Schritt S14 das Adaptionsprogramm verlassen. Ergibt die Abfrage bei S13, daß der Grenzwert ± GW überschritten ist, wird noch zusätzlich im Schritt S15 geprüft, ob der derart berechnete Adaptionswert dp größer einem Maximalwert dp(MAX) ist. Ist dies der Fall, so wird bei Schritt S16 der Adaptionswert dp auf den Maximalwert dp(MAX) begrenzt und danach mit Schritt S17 das Adaptionsprogramm verlassen. Ergibt die Prüfung beim Schritt S15, daß der Adaptionswert dp kleiner als der Maximalwert dp(MAX) ist, so wird bei S18 der Adaptionswert dp im Korrekturspeicher KORR abgelegt. Der Korrekturspeicher KORR als auch der Summenspeicher SUM(DIFF) weisen hierbei Getriebeeingangsmoment Mt, Temperatur- C(ATF) und Drehzahlklassen nT auf. Danach erfolgt bei Schritt S19 das Ende des Adaptionsprogramms.

In einer einfachen Ausführung können der Korrektur als auch der Summenspeicher lediglich eine Abhängigkeit von Getriebeeingangsmoment Mt und der Temperatur darstellen und folgendermaßen realisiert sein:

|  | C1(ATF) | C2(ATF) | C3(ATF) |
|---|---|---|---|
| Temp 1 | Wert 1 | Wert 4 | Wert 7 |
| Temp 2 | Wert 2 | Wert 5 | Wert 8 |
| Temp 3 | Wert 3 | Wert 6 | Wert 9 |

Werte (i), hier also Wert 1 bis Wert 9, bedeuten:

- beim Summenspeicher die addierte Summe der zeitlichen Differenzwerte tAD -t2 und
- beim Korrekturspeicher Werte des Abschalt-Druckniveaus pAB der ersten Kupplung.

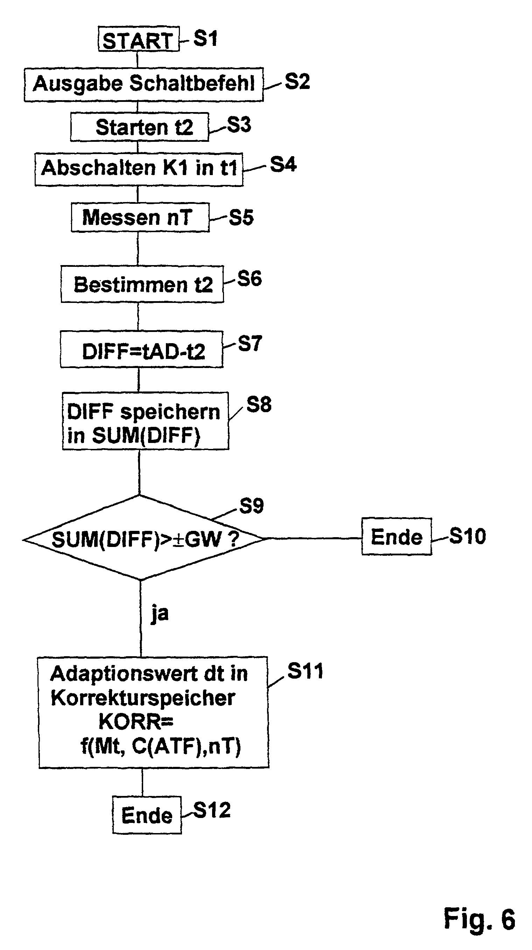

In Fig. 6 ist die zweite erfindungsgemäße Lösung dargestellt. Der Ablauf bis zum Schritt S5 ist hierbei identisch mit dem Ablauf in Fig. 4, so daß das dort Beschriebene gilt. Im Schritt S6 wird die Zeit t2 bestimmt. Die Zeit t2 ist dann erreicht, wenn die Getriebeeingangsdrehzahl nT den Überhöhungswert dn erreicht hat. Im Schritt S7 wird sodann die Differenz aus der vorgegebenen Zeit tAD minus der gemessenen Zeit t2 bestimmt. Im Schritt S8 wird diese Differenz im Summenspeicher SUM(DIFF) abgespeichert. Bei Schritt S9 wird geprüft, ob der Inhalt des Summenspeichers größer dem Grenzwert ± GW ist. Ist dies nicht der Fall, so verzweigt der Ablauf zu Schritt S10 und das Adaptionsprogramm ist beendet. Ist der Inhalt des Summenspeichers SUM(DIFF) größer dem Grenzwert ± Gw, so wird im Schritt S11 ein Adaptionswert dt im Korrekturspeicher KORR abgelegt. Zum Aufbau des Summenspeichers als auch des Korrekturspeichers gilt das in Fig. 4 Beschriebene. Danach wird im Schritt S12 das Adaptionsprogramm verlassen.

Bezugszeichen

| 1 | Antriebseinheit |
| 2 | Antriebswelle |
| 3 | hydrodynamischer Wandler |
| 4 | Pumpenrad |
| 5 | Turbinenrad |
| 6 | Leitrad |
| 7 | Wandlerkupplung |
| 8 | Turbinenwelle |
| 9 | Ravigneaux-Satz |
| 10 | Freilauf FL1 |
| 11 | Planetenradsatz |
| 12 | Getriebeausgangswelle |
| 13 | elektronische Getriebesteuerung |
| 14 | Micro-Controller |
| 15 | Speicher |
| 16 | Funktionsblock Steuerung Stellglieder |
| 17 | Funktionsblock Berechnung |
| 18 | Turbinendrehzahl-Signal |
| 19 | Getriebeausgangsdrehzahl-Signal |
| 20 | Eingangsgrößen |
| 21 | hydraulisches Steuergerät |
| 22 | Wählhebel |

**Patentansprüche**

1. Verfahren zur Druckadaption einer Überschneidungs-Hochschaltung bei einem Automatgetriebe mit einer ersten (K1) öffnenden und einer zweiten schließenden Kupplung (K2), die Überschneidungsschaltung aus zwei Phasen bestehend, wobei während der ersten Phase (t1,t2) eine Überhöhung (dn) einer Getriebeeingangsdrehzahl (nT) eingestellt wird, indem das Druckniveau der ersten Kupplung (K1) auf ein Abschalt-Druckniveau (pAB) geregelt wird und während der zweiten Phase die zweite Kupplung (K2) die Last von der ersten (K1) übernimmt, **dadurch gekennzeichnet, daß** bei Ausgabe des Schaltbefehls der Zeitraum (t2) ermittelt wird, bis die Getriebeeingangsdrehzahl (nT) die Drehzahlüberhöhung (dn) erreicht hat, diese mit einer vorgegebenen Zeit (tAD) verglichen wird, indem eine Differenz (DIFF) gebildet wird (DIFF = tAD -t2), die Differenz in einem Summenspeicher (SUM (DIFF)) vorzeichenbehaftet summiert wird und ein Adaptionswert (dp) in einem Korrekturwertspeicher (KORR) abgelegt wird, wenn der Summenspeicher (SUM(DIFF)) eines Grenzwerts (±GW) überschreitet, so daß das Abschalt-Drucknivau (pAB) der ersten Kupplung (K1) bei nachfolgenden Schaltungen adaptiert (pAB = pAB ±dp) wird.

2. Verfahren nach dem Oberbegriff von Anspruch 1, **dadurch gekennzeichnet, daß** bei Ausgabe des Schaltbefehls der Zeitraum (t2) ermittelt wird, bis die Getriebeeingangsdrehzahl (nT) die Drehzahlüberhöhung (dn) erreicht hat, diese mit einer vorgegebenen Zeit (tAD) verglichen wird, indem eine Differenz (DIFF) gebildet wird (DIFF = tAD -t2), die Differenz in einem Summenspeicher (SUM(DIFF)) vorzeichenbehaftet summiert wird, ein Adaptionswert (dt) in einem Korrekturwertspeicher (KORR) abgelegt wird, wenn der Summenspeicher (SUM (DIFF)) einen Grenzwert (±GW) überschreitet, so daß der Ausgabezeitpunkt (t1) des Abschaltbefehls bei nachfolgenden Schaltungen adaptiert wird.

3. Verfahren zur Adaption nach Anspruch 1 oder 2, **dadurch gekennzeichnet, daß** sowohl der Summenspeicher (SUM(DIFF)) als auch der Korrekturwertspeicher (KORR) in Getriebeeingangsmoment (Mt), Temperatur- (C(ATF)) und Drehzahlklassen (nT) eingeteilt ist
(SUM(DIFF) = f(Mt, C(ATF), nT) bzw.
KORR = f(Mt, C(ATF), nT)).

4. Verfahren zur Adaption nach Anspruch 3, **dadurch gekennzeichnet, daß** die vorgegebene Zeit (tAD) zusätzlich eine Funktion der Hochschaltungsart (HS) ist (tAD = f(HS)).

5. Verfahren zur Adaption nach Anspruch 4, **dadurch gekennzeichnet, daß** der Adaptionswert (dp) einen Maximalwert (dp(MAX)) nicht übersteigt.

6. Verfahren zur Adaption nach einem der vorausgegangenen Ansprüche, **dadurch gekennzeichnet, daß**, wenn die Getriebeeingangsdrehzahl (nT) eine Zwangsadaptionsüberhöhungs-Drehzahl (dn (ZWANG)) überschreitet, der Korrekturwertspeicher (KORR) insgesamt in allen Getriebeeingangsmoment- (Mt), Temperatur- (C(ATF)) und Drehzahlklassen (nT) mit einem Festwert (dp2) belegt wird.

7. Verfahren zur Adaption nach einem der vorausgegangenen Ansprüche, **dadurch gekennzeichnet, daß** die Schaltung für Adaption nicht bewertet wird, falls vor Beginn der zweiten Phase eine der folgenden Bedingungen

- Drosselklapenwert (DKI) ist kleiner einem Grenzwert (DKI < GW) oder

- Gradient der Drosselklappe (Grad(DKI)) ist größer einem Grenzwert (GRAD(DKI) > GW) oder
- Schubbetrieb erkannt oder
- Schaltbefehl über Wählhebel erkannt oder
- die Temperatur des ATF (C(ATF)) kleiner einem Grenzwert (GW) ist (C(ATF) < GW),

zutrifft.

## Claims

1. Method of pressure adaptation for a two-phase overlap upshifting process in an automatic transmission with a first opening clutch (K1) and a second closing clutch (K2), whereby during the first phase superelevation (dn) of transmission input speed (nT) is adjusted by the pressure level of the first clutch (K 1) being set to a cutout pressure level (pAB), and during the second phase the load on the first clutch (K1) is taken over by the second clutch (K2),
**characterized**
**in that** with output of the shift command, the period (t2) for the transmission input speed (nT) to reach speed superelevation (dn) is determined and compared with a specified period (tAD), resulting in a difference (DIFF) (DIFF = tAD - t2), the sign-specific difference is stored in a summation memory (SUM (DIFF)) and an adaptation value (dp) is stored in a correction value memory (KORR) when the summation memory (SUM (DIFF)) exceeds a limit value (+- GW), so that the cutout pressure level (pAB) of the first clutch is adapted during subsequent gearshifts (pAB = pAB +-dp).

2. Method according to the generic term of claim 1,
**characterized**
**in that** with output of the shift command, the period (t2) for the transmission input speed (nT) to reach speed superelevation (dn) is determined and compared with a specified period (tAD), resulting in a difference (DIFF) (DIFF = tAD - t2), the sign-specific difference is stored in a summation memory (SUM (DIFF)) and an adaptation value (dp) is stored in a correction value memory (KORR) when the summation memory (SUM (DIFF)) exceeds a limit value (+- GW), so that the output time (t1) for the cutout command is adapted during subsequent gearshifts.

3. Adaptation method according to claim 1 or 2,
**characterized**
**in that** both summation memory (SUM (DIFF)) and correction value memory (KORR) are divided into transmission input torque (Mt), temperature (C (ATF)) and speed classes (nT)

(SUM(DIFF) = f(Mt, C(ATE),nT) or
KORR) f(Mt, C(ATF), nT)).

4. Adaptation method according to claim 3,
**characterized**
**in that** the specified period (TAD) is also a function of upshifting mode (HS) (tAD = f(HS)).

5. Adaptation method according to claim 4,
**characterized**
**in that** the adaptation value (dp) does not exceed a maximum value (dp (MAX)).

6. Adaptation method according to one of the preceding claims,
**characterized**
**in that** if the transmission input speed (nT) exceeds a forced-adaptation superelevation speed (dn (ZWANG), a fixed value (dp2) is stored in the transmission input torque (Mt), the temperature (C CATF)) and the speed class (nT) for the correction value memory (KORR).

7. Adaptation method according to one of the preceding claims,
**characterized**
**in that** adaptation does not take place if any one of the following conditions is fulfilled prior the start of the second phase:

- throttle valve value (DKI) is smaller than a limit value (DKI < GW) or
- throttle valve gradient (Grad (DKI)) is higher than limit value (GRAD (DKI) > GW) or
- coasting operation is recognized or
- shift command via selector is recognized or
- temperature of ATF (C (ATF)) is lower than limit value (GW) (C (ATF) < GW).

## Revendications

1. Procédé pour l'adaptation de la pression d'un changement de rapport en montée à intersection dans une boîte de vitesses automatique comprenant un premier embrayage (K1) qui se desserre et un deuxième embrayage (K2) qui se serre, le changement de rapport à intersection étant composé de deux phases, où, pendant la première phase (t1, t2), il s'établit une élévation (dn) d'une vitesse de rotation d'entrée de la boîte de vitesses (nT), par le fait que le niveau de pression du premier embrayage (K1) est réglé sur un niveau de pression de débrayage (pAB) et que, pendant la deuxième phase, le deuxième embrayage (K2) prend la charge du premier (K1), **caractérisé en ce que**, lors de l'émission de l'ordre de changement de rapport, l'intervalle de temps (t2), qui s'écoule jusqu'à ce que la vitesse de rotation d'entrée de la boîte de vitesses (nT) ait atteint l'élévation de la vitesse de rotation (dn), est mesuré, cet intervalle de temps est comparé à un temps prédéterminé (tAD), une différence (DIFF) étant formée (DIFF = tAD - t2), la différence étant additionnée avec son signe dans une mémoire d'addition (SUM(DIFF)), et une valeur d'adaptation (dp) étant enregistrée dans une mémoire de valeurs de correction (KORR) lorsque la mémoire d'addition (SUM(DIFF)) devient supérieure à une valeur limite (± GW), de sorte que le niveau de pression de débrayage (pAB) du premier embrayage (K1) est adapté lors des changements de rapport suivants.

2. Procédé selon le préambule de la revendication 1, **caractérisé en ce que**, lors de l'émission de l'ordre de changement de rapport, l'intervalle de temps (t2), qui s'écoule jusqu'au moment où la vitesse de rotation d'entrée de la boîte de vitesse (nT) a atteint l'élévation de la vitesse de rotation (dn), est mesuré, cet intervalle de temps est comparé à un temps prédéterminé (tAD), une différence (DIFF) étant formée (DIFF = tAD - t2), la différence étant additionnée avec son signe dans une mémoire d'addition (SUM(DIFF), et une valeur d'adaptation (dp) étant enregistrée dans une mémoire de valeurs d'adaptation (KORR) lorsque la mémoire d'addition (SUM(DIFF)) devient supérieure à une valeur limite (± GW), de sorte que l'instant d'émission (t1) de l'ordre de débrayage est adapté lors des changements de rapport suivants.

3. Procédé pour l'adaptation selon la revendication 1 ou 2, **caractérisé en ce que** la mémoire d'addition (SUM(DIFF) ainsi que la mémoire de valeurs de correction (KORR), sont divisées en classes de couple d'entrée de la boîte de vitesses (Mt), de température (C(ATF)) et de vitesse de rotation (nT), (SUM(DIFF) = f (Mt, C(ATF), nT) et respectivement KORR = f (Mt, C(ATF), nT)).

4. Procédé pour l'adaptation selon la revendication 3, **caractérisé en ce que** le temps prédéterminé (tAD) est en outre une fonction du type de la montée des rapports (HS), (tAD = f (HS)).

5. Procédé pour l'adaptation selon la revendication 4, **caractérisé en ce que** la valeur d'adaptation (dp) ne devient pas supérieure à une valeur maximale (dp (MAX)).

6. Procédé pour l'adaptation selon l'une des revendications précédentes, **caractérisé en ce que**, lorsque la vitesse de rotation d'entrée de la boîte de vitesses (nT) devient supérieure à une vitesse de rotation d'élévation de l'adaptation forcée (dn (ZWANG)), la mémoire de valeurs de correction (KORR) est entièrement occupée par une valeur fixe (dp2) dans toutes les classes de couple d'entrée de la boîte de vitesses (Mt), de température (C (ATF)) et de vitesse de rotation (nT).

7. Procédé pour l'adaptation selon l'une des revendications précédentes, **caractérisé en ce que** le changement de rapport n'est pas évalué pour l'adaptation si, avant le début de la deuxième phase, on est en présence d'une des conditions suivantes :

   - la valeur (DKI) du volet des gaz est inférieure à une valeur limite (DKI< GW) ou
   - le gradient du volet des gaz (GRAD(DKI)) est supérieur à une valeur limite (GRAD (DKI) > GW)) ou
   - un ordre de changement de rapport par le levier sélecteur est détecté ou
   - la température du ATF (C (ATF)) est inférieure à une valeur limite (GW), (C (ATF) < GW).

Fig. 1

| Kupplungs - Logik | | | | | | | | |
|---|---|---|---|---|---|---|---|---|
| POS/GANG | Kupplung | | | | | | | Freilauf |
| | A | B | C | D | E | F | G | 1. G. |
| R = R-Gang | | * | | * | | | * | |
| N = Neutral | | | | | | * | * | |
| D, 1. Gang | * | | | | | | * | * |
| D, 2. Gang | * | | * | | | | * | |
| D, 3. Gang | * | | * | | | * | | |
| D, 4. Gang | * | | | | * | * | | |
| D, 5. Gang | | | * | | * | * | | |
| 1, 1. Gang | * | | | * | | | * | * |

\* - aktiv

**Fig. 2**

Fig. 3A

SB

1

0

t0

t

Fig. 3B

p(K1)

pAB(2)
pAB
pAB(1)

t1

t

Fig. 3C

tAD

nT

dn(ZWANG)

D  B  F

dn

A

nAB·i(ALT)

E C  G

t1  t2(1)  t2  t2(2)

t

Fig. 4

Fig. 5

START — S1

Ausgabe Schaltbefehl — S2

Starten t2 — S3

Abschalten K1 in t1 — S4

Messen nT — S5

Bestimmen t2 — S6

DIFF=tAD-t2 — S7

DIFF speichern
in SUM(DIFF) — S8

SUM(DIFF)>±GW ? — S9

Ende — S10

ja

Adaptionswert dt in
Korrekturspeicher
KORR=
f(Mt, C(ATF),nT) — S11

Ende — S12

**Fig. 6**

13